# EUROPEAN PATENT APPLICATION

(11) **EP 4 700 531 A1**
(43) Date of publication of application: **25.02.2026**
(21) Application number: 24803617.0
(22) Date of filing: 22.04.2024
(51) Int. Cl.: G06F 1/16, H04R 1/28

(54) **ELECTRONIC DEVICE COMPRISING SPEAKER AND SHIELD CAN**

(30) Priority: 11.05.2023 KR 20230060907; 23.06.2023 KR 20230080996
(71) Applicant: Samsung Electronics Co., Ltd., Suwon-si, Gyeonggi-do 16677 (KR)
(72) Inventor: KIM, Joosoon, Suwon-si Gyeonggi-do 16677 (KR); KIM, Jinsu, Suwon-si Gyeonggi-do 16677 (KR); SEO, Jaeil, Suwon-si Gyeonggi-do 16677 (KR); KIM, Namki, Suwon-si Gyeonggi-do 16677 (KR); NA, Hyoseok, Suwon-si Gyeonggi-do 16677 (KR); SIM, Myoungsung, Suwon-si Gyeonggi-do 16677 (KR); YUN, Cheongno, Suwon-si Gyeonggi-do 16677 (KR); JU, Wanjae, Suwon-si Gyeonggi-do 16677 (KR)
(74) Representative: Gulde & Partner
(86) International application number: PCT/KR2024/005422
(87) International publication number: WO 2024/232562

(57) **Abstract**

This electronic device comprises: a first support member; a second support member; a printed circuit board disposed on the first support member; a speaker disposed on the first support member; an electronic component disposed on the printed circuit board; a shield can including a first portion that surrounds the speaker and a second portion that extends from the first portion toward the electronic component, surrounds the electronic component, and includes a first opening; and a first sealing member surrounding an edge of the first opening. A first space between the first portion and the speaker is connected to a second space between the second portion and the printed circuit board for a resonance space.

## Description

### [Technical Field]

The present disclosure relates to an electronic device including a speaker and a shield can.

### [Background Art]

An electronic device may include a speaker for providing an audio signal. The audio signal output from the speaker may be transmitted to the outside of the electronic device. A quality of the audio signal may be improved through a resonance phenomenon that vibrates with a large amplitude at a specific frequency. Since an audio signal in a low sound range having a relatively low frequency has a relatively long wavelength, a relatively large space may be used for the resonance phenomenon. For portability of the electronic device, the electronic device may be miniaturized, and various electronic components may be disposed inside the electronic device to implement various functions of the electronic device.

The above-described information may be provided as a related art for a purpose of helping understanding of the present disclosure. No claim or determination is raised as to whether any of the above-described descriptions may be applied as a prior art related to the present disclosure.

### [Disclosure]

### [Technical Solution]

An electronic device is provided. The electronic device may include a first support member. The electronic device may include a second support member spaced apart from the first support member. The electronic device may include a printed circuit board (PCB) including a first through-hole, the PCB disposed on a surface of the first support member facing the second support member. The electronic device may include a speaker, inserted into the first through-hole, disposed on the surface of the first support member. The electronic device may include an electronic component, disposed on a surface of the PCB facing the second support member, spaced apart from the speaker. The electronic device may include a shield can, disposed on the surface of the PCB, at least partially enclosing the speaker and the electronic component. The shield can may include a first portion, including a region overlapping the speaker when the shield can is viewed from above, at least partially enclosing the speaker. The shield can may include a second portion, partially enclosing the electronic component by extending from the first portion toward the electronic component, including a first opening facing the electronic component. The electronic device may include a first sealing member, surrounding a periphery of the first opening, disposed between the second portion and the second support member. A first space between the first portion and the speaker may be connected to a second space between the second portion and the PCB, to provide a resonance space for an audio signal output from the speaker.

An electronic device is provided. The electronic device may include a first support member. The electronic device may include a second support member spaced apart from the first support member. The electronic device may include a printed circuit board (PCB) including a first through-hole, the PCB disposed on a surface of the first support member facing the second support member. The electronic device may include a speaker, inserted into the first through-hole, disposed on the surface of the first support member. The electronic device may include a camera, disposed on the surface of the first support member, spaced apart from the speaker. The electronic device may include a flash, disposed on the PCB, positioned between the speaker and the camera, and configured to emit light toward the first opening. The electronic device may include a shield can, disposed on the surface of the PCB, at least partially enclosing the speaker and the flash. The shield can may include a first portion, including a region overlapping the speaker when the shield can is viewed from above, at least partially enclosing the speaker. The shield can may include a second portion, partially enclosing the flash by extending from the first portion toward the flash, including the first opening aligned with the flash. The electronic device may include a first sealing member, surrounding a periphery of the first opening, disposed between the second portion and the second support member. A first space between the first portion and the speaker may be connected to a second space between the second portion and the PCB, to provide a resonance space for an audio signal output from the speaker.

### [Description of the Drawings]

FIG. 1 is a block diagram of an electronic device in a network environment according to an embodiment.
FIG. 2 illustrates an electronic device according to an embodiment.
FIG. 3 is an exploded perspective view of an electronic device according to an embodiment.
FIG. 4A illustrates a portion of an electronic device according to an embodiment in which a second support member is omitted.
FIG. 4B illustrates a shield can according to an embodiment.
FIG. 4C illustrates a state in which a second support member is disposed in the electronic device according to an embodiment illustrated in FIG. 4A.
FIG. 5 is an exploded perspective view of an electronic device according to an embodiment.
FIG. 6A is a cross-sectional view in which an electronic device according to an embodiment is cut along line A-A' of FIG. 4A.
FIG. 6B is an enlarged view of a region B of FIG. 6A.
FIGS. 7A and 7B illustrate a support structure according to an embodiment.
FIG. 7C illustrates a bridge of a shield can.
FIG. 8A is a graph indicating a change in an output sound pressure level of a speaker.
FIG. 8B illustrates an example of an electronic device according to a comparative example.
FIGS. 9 and 10 illustrate a portion of an electronic device according to an embodiment in which a second support member is omitted.

### [Mode for Invention]

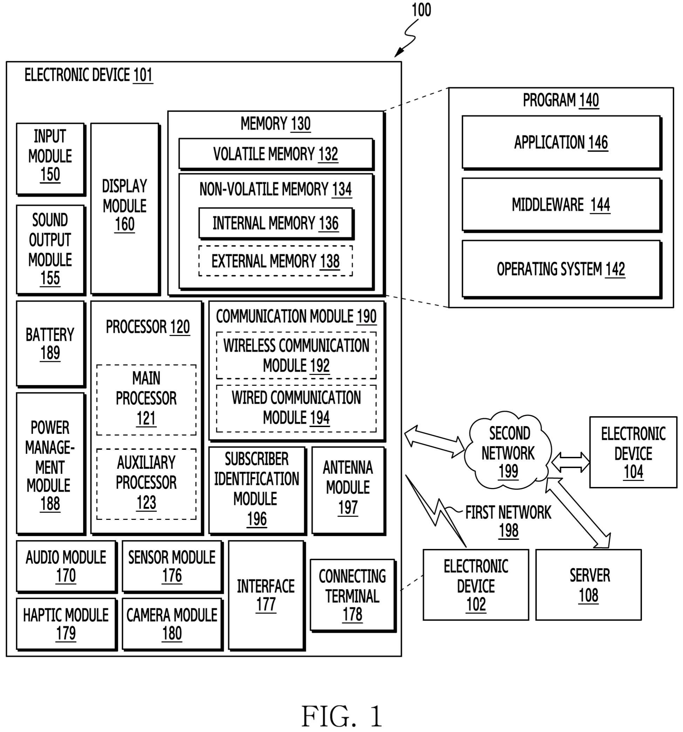

FIG. 1 is a block diagram illustrating an electronic device 101 in a network environment 100 according to an embodiment.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

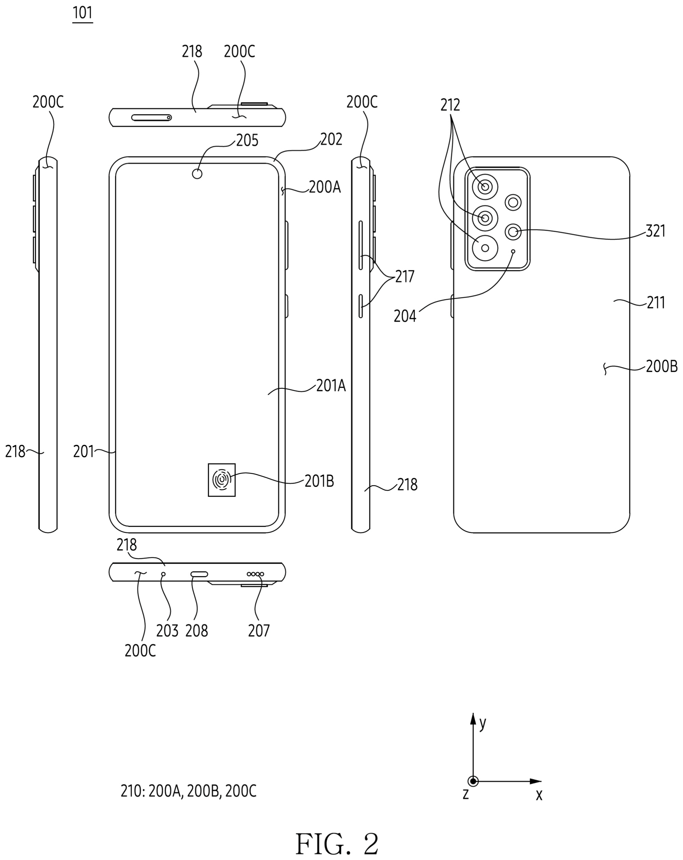

FIG. 2 illustrates an electronic device according to an embodiment.

Referring to FIG. 2, an electronic device 101 according to an embodiment may include a housing 210 forming an exterior of the electronic device 101. For example, the housing 210 may include a first surface (or a front surface) 200A, a second surface (or a rear surface) 200B, and a third surface (or a side surface) 200C surrounding a space between the first surface 200A and the second surface 200B.

The electronic device 101 according to an embodiment may include a substantially transparent first plate 202. According to an embodiment, the first plate 202 may form at least a portion of the first surface 200A. According to an embodiment, the first plate 202 may include, for example, a glass plate including various coating layers, or a polymer plate, but is not limited thereto.

The electronic device 101 according to an embodiment may include a substantially opaque second plate 211. According to an embodiment, the second plate 211 may form at least a portion of the second surface 200B. According to an embodiment, the second plate 211 may be formed by coated or colored glass, ceramic, polymer, metal (e.g., aluminum, stainless steel (STS), or magnesium), or a combination of at least two of the materials.

The electronic device 101 according to an embodiment may include a frame 218. According to an embodiment, the frame 218 may form at least a portion of the third surface 200C of the electronic device 101 by being coupled with the first plate 202 and/or the second plate 211. For example, the frame 218 may also entirely form the third surface 200C of the electronic device 101. For example, the frame 218 may also form the third surface 200C of the electronic device 101 together with the first plate 202 and/or the second plate 211.

The electronic device 101 according to an embodiment may include at least one of a display 201, audio modules 203, 204, and 207, a sensor module (not illustrated), camera modules 205, 212, and 213, a key input device 217, a light-emitting element (not illustrated), and/or a connector hole 208. According to an embodiment, the electronic device 101 may omit at least one of the components (e.g., the key input device 217 or the light-emitting element (not illustrated)), or may additionally include another component.

According to an embodiment, at least a portion of the display 201 (e.g., the display module 160 of FIG. 1) may be visible through the first plate 202 forming the first surface 200A. According to an embodiment, the display 201 may be disposed on a rear surface of the first plate 202.

According to an embodiment, a shape of an outer periphery of the display 201 may be formed substantially the same as a shape of an outer periphery of the first plate 202 adjacent to the display 201. According to an embodiment, in order to expand an area in which the display 201 is visually exposed, a gap between the outer periphery of the display 201 and the outer periphery of the first plate 202 may be formed substantially the same.

According to an embodiment, the display 201 (or the first surface 200A of the electronic device 101) may include a screen display region 201A. According to an embodiment, the display 201 may provide a user with visual information through the screen display region 201A. In the illustrated embodiment, when the first surface 200A is viewed from the front, the screen display region 201A is illustrated as being spaced apart from an outer periphery of the first surface 200A and being positioned inside the first surface 200A, but it is not limited thereto. According to an embodiment, when the first surface 200A is viewed from the front, at least a portion of a periphery of the screen display region 201A may be substantially coincided with a periphery of the first surface 200A (or the first plate 202).

According to an embodiment, the screen display region 201A may include a sensing region 201B configured to obtain biometric information of the user. Herein, a meaning of "the screen display region 201A includes the sensing region 201B" may be understood as at least a portion of the sensing region 201B overlapping the screen display region 201A. For example, the sensing region 201B may mean a region that may display the visual information by the display 201 similar to another region of the screen display region 201A, and that may additionally obtain the biometric information (e.g., a fingerprint) of the user. According to an embodiment, the sensing region 201B may also be formed in the key input device 217.

According to an embodiment, the display 201 may include a region in which a first camera module 205 (e.g., the camera module 180 of FIG. 1) is positioned. According to an embodiment, an opening is formed in the region of the display 201, and the first camera module 205 (e.g., a punch hole camera) may be at least partially disposed in the opening to face the first surface 200A. In this case, the screen display region 201A may surround at least a portion of a periphery of the opening. According to an embodiment, the first camera module 205 (e.g., an under display camera (UDC)) may be disposed under the display 201 to overlap the region of the display 201. In this case, the display 201 may provide the user with the visual information through the region, and additionally, the first camera module 205 may obtain an image corresponding to a direction toward the first surface 200A through the region of the display 201.

According to an embodiment, the display 201 may be coupled with or disposed adjacent to touch sensing circuitry, a pressure sensor capable of measuring intensity (pressure) of a touch, and/or a digitizer that detects a magnetic field type stylus pen.

According to an embodiment, the audio modules 203, 204, and 207 (e.g., the audio module 170 of FIG. 1) may include the microphone holes 203 and 204 and/or the speaker hole 207.

According to an embodiment, the microphone holes 203 and 204 may include the first microphone hole 203 formed in a partial region of the third surface 200C and/or the second microphone hole 204 formed in a partial region of the second surface 200B. A microphone (not illustrated) for obtaining an external sound may be disposed inside the microphone holes 203 and 204. The microphone may include a plurality of microphones to sense a direction of sound.

According to an embodiment, the second microphone hole 204 formed in the partial region of the second surface 200B may be disposed adjacent to the camera modules 205, 212, and 213. For example, the second microphone hole 204 may obtain sound according to an operation of the camera modules 205, 212, and 213. However, it is not limited thereto.

According to an embodiment, the speaker hole 207 may include an external speaker hole 207 and a call receiver hole (not illustrated). The external speaker hole 207 may be formed in a portion of the third surface 200C of the electronic device 101. According to an embodiment, the external speaker hole 207 may be implemented as one hole with the microphone hole 203. Although not illustrated, the call receiver hole (not illustrated) may be formed on another portion of the third surface 200C. For example, the call receiver hole may be formed on an opposite side of the external speaker hole 207 on the third surface 200C. For example, based on the illustration of FIG. 2, the external speaker hole 207 may be formed on the third surface 200C corresponding to a lower end of the electronic device 101, and the call receiver hole may be formed on the third surface 200C corresponding to an upper end of the electronic device 101. However, it is not limited thereto, and according to an embodiment, the call receiver hole may also be formed at a position other than the third surface 200C. For example, the call receiver hole may also be formed by a space separated between the first plate 202 (or the display 201) and the frame 218.

According to an embodiment, the electronic device 101 may include at least one speaker (not illustrated) configured to output sound to the outside of the housing 210 through the external speaker hole 207 and/or the call receiver hole (not illustrated).

According to an embodiment, the sensor module (not illustrated) (e.g., the sensor module 176 of FIG. 1) may generate an electrical signal or a data value corresponding to an operating state inside the electronic device 101 or an external environmental state. For example, the sensor module may include at least one of a proximity sensor, an HRM sensor, a fingerprint sensor, a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

According to an embodiment, the camera modules 205, 212, and 213 (e.g., the camera module 180 of FIG. 1) may include the first camera module 205 disposed to face the first surface 200A of the electronic device 101, the second camera module 212 disposed to face the second surface 200B, and the flash 321.

According to an embodiment, the second camera module 212 may include a plurality of cameras (e.g., a dual camera, a triple camera, or a quad camera). However, the second camera module 212 is not necessarily limited to including the plurality of cameras, and may also include one camera.

According to an embodiment, the first camera module 205 and the second camera module 212 may include one or a plurality of lenses, an image sensor, and/or an image signal processor.

According to an embodiment, the flash 321 may include, for example, a light-emitting diode or a xenon lamp. According to an embodiment, two or more lenses (an infrared camera and a wide-angle and telephoto lens) and image sensors may be disposed on one surface of the electronic device 101.

According to an embodiment, the key input device 217 (e.g., the input module 150 of FIG. 1) may be disposed on the third surface 200C of the electronic device 101. According to an embodiment, the electronic device 101 may not include a portion or all of the key input device 217, and the key input device 217 that is not included may be implemented in another form, such as a soft key, on the display 201.

According to an embodiment, the connector hole 208 may be formed on the third surface 200C of the electronic device 101 such that a connector of an external device may be accommodated. A connecting terminal (e.g., the connecting terminal 178 of FIG. 1) electrically connected to the connector of the external device may be disposed in the connector hole 208. The electronic device 101 according to an embodiment may include an interface module (e.g., the interface 177 of FIG. 1) for processing an electrical signal transmitted and received through the connecting terminal.

According to an embodiment, the electronic device 101 may include the light-emitting element (not illustrated). For example, the light-emitting element (not illustrated) may be disposed on the first surface 200A of the housing 210. The light-emitting element (not illustrated) may provide state information of the electronic device 101 in a form of light. According to an embodiment, the light-emitting element (not illustrated) may provide a light source linked with an operation of the first camera module 205. For example, the light-emitting element (not illustrated) may include an LED, an IR LED, and/or a xenon lamp.

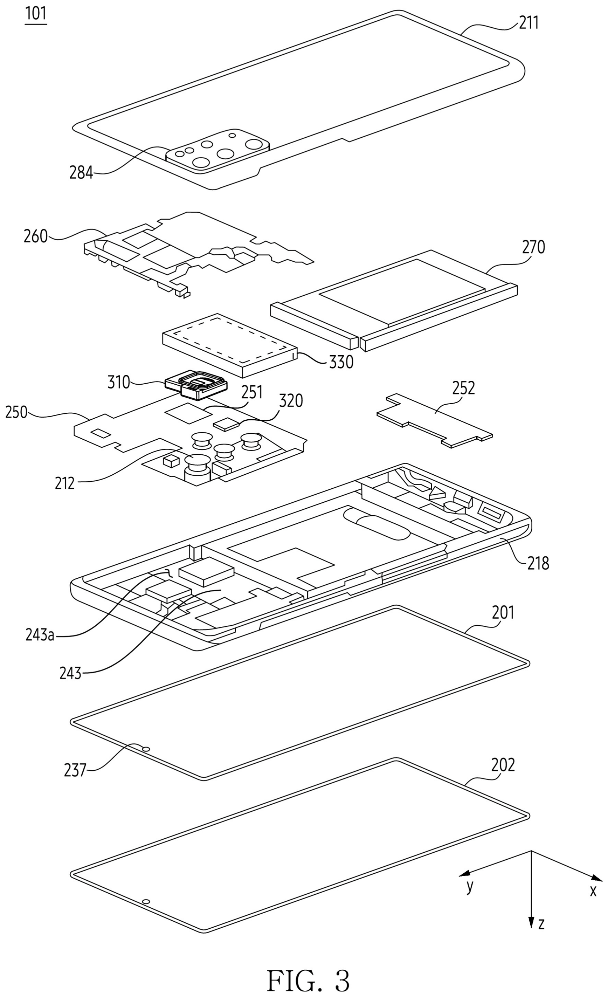

FIG. 3 is an exploded perspective view of an electronic device according to an embodiment.

Hereinafter, an overlapping description of a configuration having the same reference numerals as the above-described configuration will be omitted.

Referring to FIG. 3, an electronic device 101 according to an embodiment may include a frame 218, a first support member 243, a printed circuit board 250, a sub-PCB 252, a second support member 260, and/or a battery 270.

The electronic device 101 according to an embodiment may include the frame 218 forming an exterior (e.g., the third surface 200C of FIG. 2) of the electronic device 101 and the first support member 243 extending inward from the frame 218. According to an embodiment, the frame 218 and the first support member 243 may be disposed between a display 201 and a second plate 211. For example, the frame 218 may surround a space between the second plate 211 and a first plate 202 (and/or the display 201). For example, the first support member 243 may extend from the frame 218 in the space.

According to an embodiment, the first support member 243 may support or accommodate other components included in the electronic device 101. For example, the display 201 may be disposed on a surface of the first support member 243 facing a direction (e.g., a +z direction), and the display 201 may be supported by the first support member 243. For example, the PCB 250, the sub-PCB 252, the battery 270, and/or a second camera module 212 may be disposed on another surface facing an opposite direction (e.g., a -z direction) to the direction of the first support member 243. For example, the PCB 250, the sub-PCB 252, the battery 270, and the second camera module 212 may be seated in a recess defined by the frame 218 and/or the first support member 243.

According to an embodiment, the PCB 250, the sub-PCB 252, and/or the battery 270 may be coupled with the first support member 243. For example, the PCB 250 and/or the sub-PCB 252 may be fixedly disposed on the first support member 243 through a coupling member such as a screw. For example, the battery 270 may be fixedly disposed on the first support member 243 through an adhesive member (e.g., a double-sided tape). However, it is not limited by the above-described example.

According to an embodiment, the second support member 260 may be disposed between the PCB 250 and the second plate 211. According to an embodiment, the second support member 260 may be disposed on the PCB 250. For example, the second support member 260 may be disposed on a surface of the PCB 250 facing the -z direction.

According to an embodiment, the second support member 260 may at least partially overlap the PCB 250 with respect to a z-axis. According to an embodiment, the second support member 260 may cover at least a partial region of the PCB 250. Accordingly, the second support member 260 may protect the PCB 250 from a physical impact or prevent detachment of a connector coupled to the PCB 250.

According to an embodiment, the second support member 260 may be fixedly disposed on the PCB 250 through a coupling member (e.g., a screw). As another example, the second support member 260 may be coupled to the first support member 243 through a coupling member.

According to an embodiment, the display 201 may be disposed between the first support member 243 and the first plate 202. For example, the first plate 202 may be disposed on a side of the display 201 (e.g., in the +z direction), and the first support member 243 may be disposed on another side (e.g., in the -z direction).

According to an embodiment, the first plate 202 may be coupled with the display 201. For example, the first plate 202 and the display 201 may be attached to each other through an optical adhesive member (e.g., an optically clear adhesive (OCA) or an optically clear resin (OCR)) interposed therebetween.

According to an embodiment, the first plate 202 may be coupled with the frame 218. For example, the first plate 202 may include an outer portion extending outside the display 201 when viewed in a z-axis direction, and may be attached with the frame 218 through an adhesive member (e.g., a waterproof tape) disposed between the outer portion of the first plate 202 and the frame 218. However, it is not limited by the above-described example.

According to an embodiment, a processor (e.g., the processor 120 of FIG. 1), memory (e.g., the memory 130 of FIG. 1), and/or an interface (e.g., the interface 177 of FIG. 1) may be disposed on the PCB 250 and/or the sub-PCB 252. The processor may include, for example, one or more of a central processing unit, an application processor, a graphic processing unit, an image signal processor, a sensor hub processor, or a communication processor. The memory may include, for example, volatile memory or non-volatile memory. The interface may include, for example, a high definition multimedia interface (HDMI), a universal serial bus (USB) interface, an SD card interface, and/or an audio interface. The interface may electrically or physically connect the electronic device 101 to an external electronic device, and may include a USB connector, an SD card/MMC connector, or an audio connector. According to an embodiment, the PCB 250 and the sub-PCB 252 may be operatively or electrically connected to each other through a connecting member (e.g., a flexible PCB).

According to an embodiment, the battery 270 (e.g., the battery 189 of FIG. 1) may supply power to at least one component of the electronic device 101. For example, the battery 270 may include a rechargeable secondary battery or a fuel cell. For example, at least a portion of the battery 270 may be disposed on substantially the same plane as the PCB 250 and/or the sub-PCB 252.

The electronic device 101 according to an embodiment may include an antenna module (not illustrated) (e.g., the antenna module 197 of FIG. 1). According to an embodiment, the antenna module may be disposed between the second plate 211 and the battery 270. The antenna module may include, for example, a near field communication (NFC) antenna, a wireless charging antenna, and/or a magnetic secure transmission (MST) antenna. The antenna module may, for example, perform short-range communication with an external device or wirelessly transmit and receive power with the external device.

According to an embodiment, the first camera module 205 (e.g., a front camera) may be disposed in at least a portion of the first support member 243 such that a lens may receive external light through a partial region (e.g., a camera region 237) of the first plate 202 (e.g., the front surface 200A of FIG. 2).

According to an embodiment, the second camera module 212 (e.g., a rear camera) may be disposed between the first support member 243 and the second plate 211. According to an embodiment, the second camera module 212 may be electrically connected to the PCB 250 through a connecting member (e.g., a connector). According to an embodiment, the second camera module 212 may be disposed such that a lens may receive external light through a camera region 284 of the second plate 211 of the electronic device 101.

According to an embodiment, the camera region 284 may be formed on a surface (e.g., the rear surface 200B of FIG. 2) of the second plate 211. According to an embodiment, the camera region 284 may be formed to be at least partially transparent such that external light may be incident on the lens of the second camera module 212. According to an embodiment, at least a portion of the camera region 284 may protrude from the surface of the second plate 211 to a predetermined height. However, it is not limited thereto, and according to an embodiment, the camera region 284 may also form substantially the same plane as the surface of the second plate 211.

According to an embodiment, a housing 210 of the electronic device 101 may mean a configuration or a structure forming at least a portion of the exterior of the electronic device 101. In this respect, at least a portion of the first plate 202, the frame 218, and/or the second plate 211 forming the exterior of the electronic device 101 may be referred to as the housing 210 of the electronic device 101.

The electronic device 101 according to an embodiment may include a speaker 310. The speaker 310 may be configured to output an audio signal. For example, the speaker 310 may include a diaphragm configured to output an audio signal by vibrating based on an electrical signal, at least one voice coil that provides the vibration to the diaphragm, and a permanent magnet configured to form a magnetic field, but is not limited thereto.

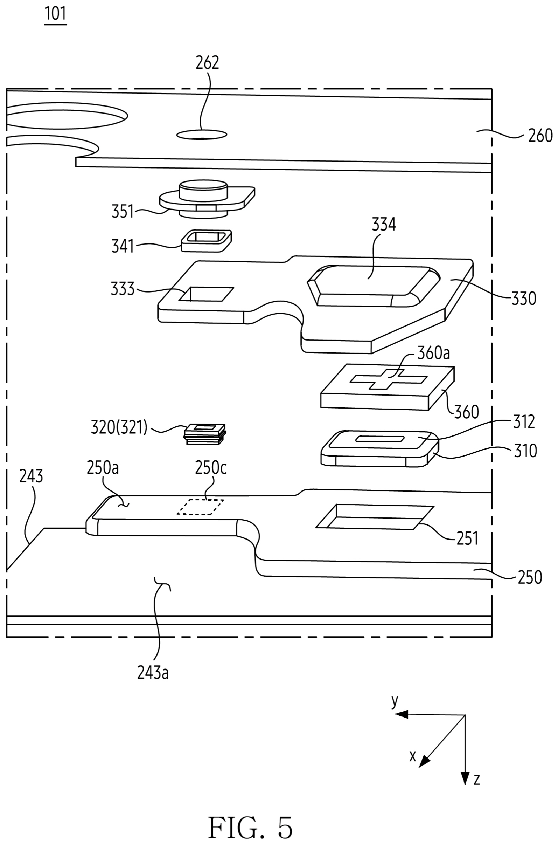

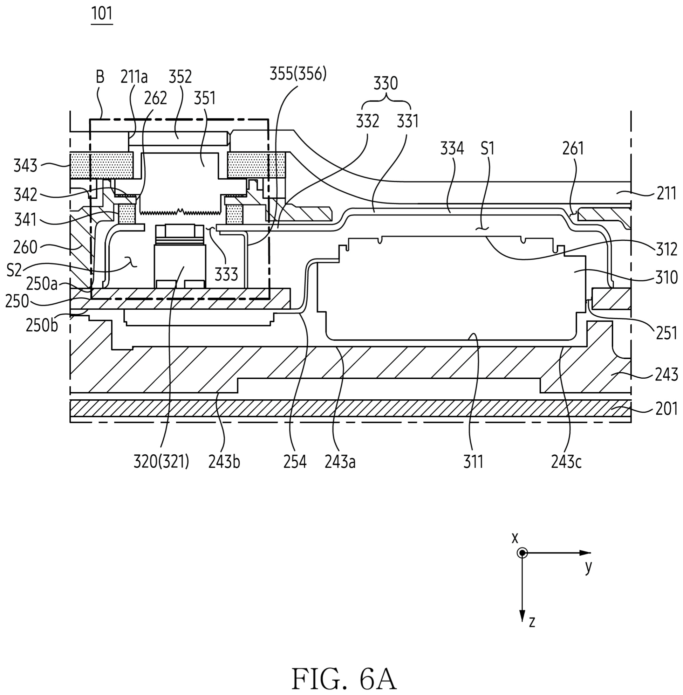

According to an embodiment, the speaker 310 may be disposed on the first support member 243. For example, the speaker 310 may be inserted into a first through-hole 251 of the PCB 250 and disposed on a surface 243a of the first support member 243 facing the second plate 211. For example, the speaker 310 may be positioned under the first support member 243 (e.g., in the -z direction). A disposition structure of the speaker 310 will be described in detail with reference to FIGS. 5 and 6A.

The electronic device 101 according to an embodiment may include a shield can 330 at least partially enclosing the speaker 310 by covering at least a portion of the PCB 250. At least a portion of the speaker 310 may be enclosed by the shield can 330. For example, a portion of the speaker 310 exposed under the PCB 250 (e.g., in the -z direction) through the first through-hole 251 may be enclosed by the shield can 330. According to an embodiment, the shield can 330 may form a resonance space for an audio signal output from the speaker 310 by partially enclosing the speaker 310. For example, the audio signal output from the speaker 310 may resonate in the resonance space enclosed by the shield can 330. For example, a space between a rear surface (e.g., a second surface 312 of FIG. 6A) of the speaker 310 and the shield can 330 may form a resonance space for resonance of an audio signal.

According to an embodiment, the electronic device 101 may include an electronic component 320 for implementing various functions. Due to a space occupied by one or more electronic components 320, the resonance space for the resonance of the audio signal output from the speaker 310 may be insufficient. In a case that the resonance space is insufficient, a quality of an audio signal in a relatively low sound range may be deteriorated. The electronic device 101 according to an embodiment may have a structure capable of providing a relatively wide resonance space by expanding the resonance space formed through the shield can 330.

Hereinafter, a structure for expanding the resonance space will be described with reference to drawings. In describing an example, the same reference numerals are given to the same components, and an overlapping description may be omitted. In the present disclosure, connection of spaces may indicate that a plurality of spaces distinct from each other perform fluid communication with each other. The plurality of spaces performing the fluid communication may provide a space for vibration by allowing a flow of air. For example, the spaces connected to each other may be referred to as one space that may provide a resonance space for resonance of an audio signal.

In the present disclosure, a relative term such as "above" and "under" may be used to describe a relative position between components. For example, in a case that the electronic device illustrated in the drawing is flipped, the "above" and the "under" may be switched.

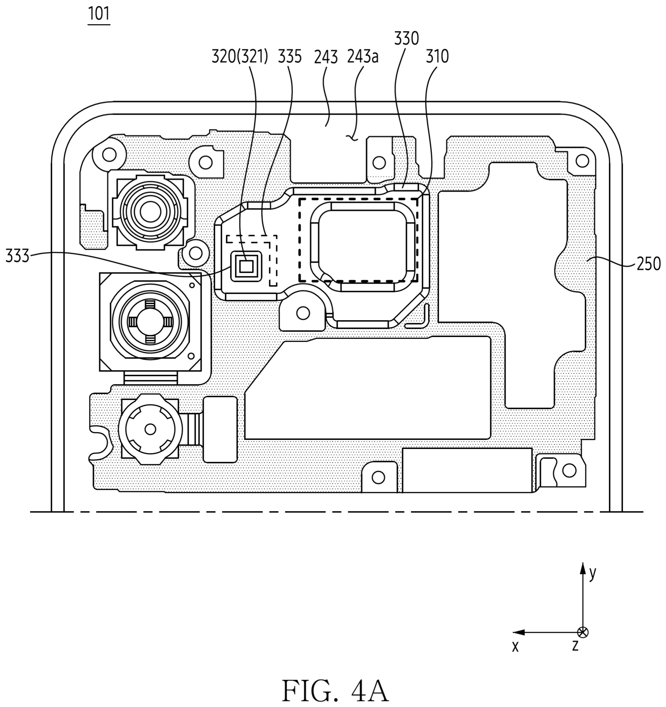

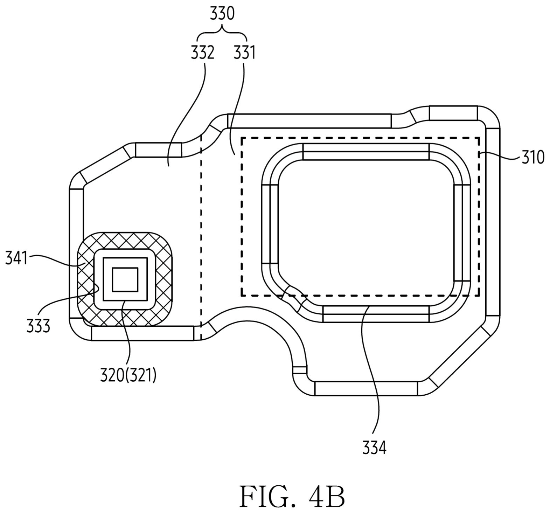

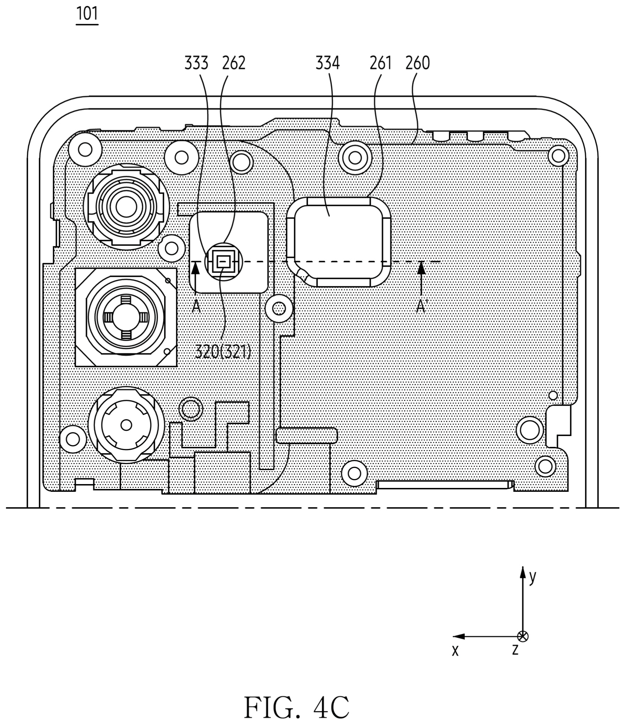

FIG. 4A illustrates a portion of an electronic device according to an embodiment in which a second support member is omitted. FIG. 4B illustrates a shield can according to an embodiment. FIG. 4C illustrates a state in which a second support member is disposed in the electronic device according to an embodiment illustrated in FIG. 4A.

Referring to FIG. 4A, an electronic device 101 according to an embodiment may include a first support member 243, a printed circuit board 250, a speaker 310, an electronic component 320, a shield can 330, a second support member (e.g., a second support member 260 of FIG. 4C), and/or a first sealing member (e.g., a first sealing member 341 of FIG. 4B).

According to an embodiment, the first support member 243 may support or accommodate components of the electronic device 101. For example, the PCB 250 may be disposed on a surface 243a of the first support member 243. The first support member 243 may support the PCB 250.

According to an embodiment, the PCB 250 may include a plurality of conductive layers and a plurality of non-conductive layers alternately laminated with the plurality of conductive layers. The PCB 250 may provide an electrical connection between electronic components electrically connected to the PCB 250 using a wiring and a conductive via formed by the conductive layers.

According to an embodiment, the PCB 250 may include a first through-hole (e.g., the first through-hole 251 of FIG. 3) for the speaker 310. For example, the speaker 310 may be disposed in a first through-hole 251. The speaker 310 may include a first surface (e.g., a first surface 311 of FIG. 6A) and a second surface (e.g., a second surface 312 of FIG. 6A). A first surface 311 of the speaker 310 facing the first support member 243 may be referred to a front surface of the speaker 310, and a second surface 312 of the speaker 310 opposite to the first surface 311 may be referred to a rear surface of the speaker 310.

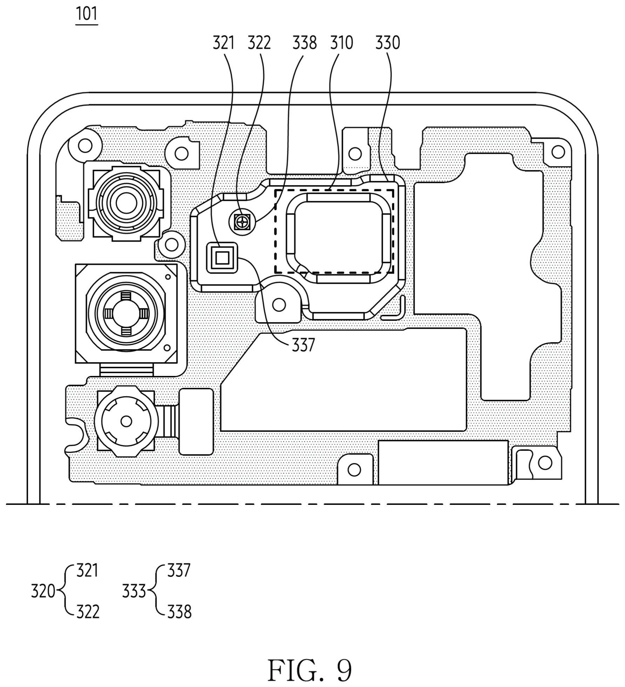

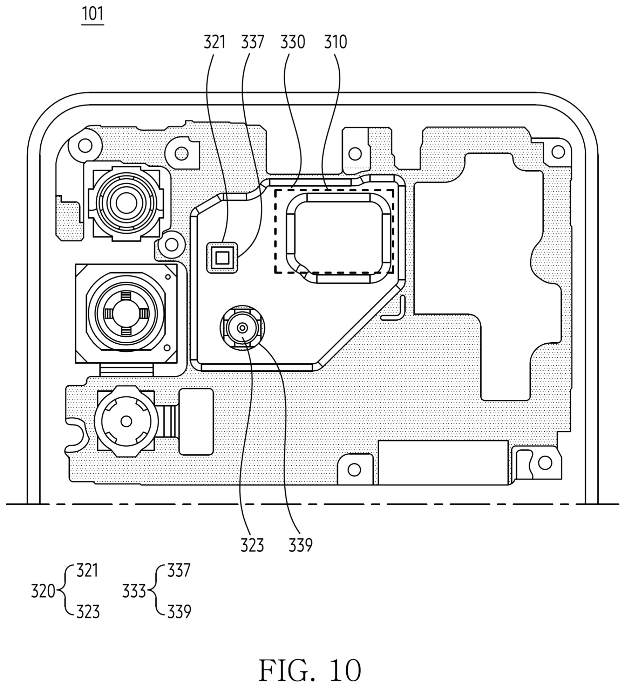

According to an embodiment, the electronic component 320 may be disposed on a surface 250a of the PCB 250. The electronic component 320 disposed on the surface 250a of the PCB 250 may be spaced apart from the speaker 310 positioned in the first through-hole 251. The electronic component 320 may include one or more electronic components adjacent to the speaker 310 on the PCB 250. For example, the electronic component 320 may include at least one of a flash 321, a sensor, a camera (e.g., a camera 323 of FIG. 10), or a connector hole (e.g., a connector hole 322 of FIG. 9), but is not limited thereto.

According to an embodiment, the shield can 330 may be disposed on the surface 250a of the PCB 250. The shield can 330 may form a resonance space for an audio signal output from the speaker 310 by partially enclosing the speaker 310. For example, the shield can 330 may cover a partial region of the PCB 250 including the first through-hole 251. The speaker 310 positioned in the first through-hole 251 may be covered by the shield can 330. For example, the shield can 330 may form a back volume chamber of the speaker 310 by being spaced apart from the second surface (e.g., the second surface 312 of FIG. 6A) of the speaker 310 and facing the second surface 312. The back volume chamber may function as a resonance space in which an audio signal output from the speaker 310 resonates, thereby improving a quality of an audio signal in a low sound range. Since the shield can 330 may form a resonance space for an audio signal, a resonance space may be secured even though a separate structure for the resonance space is not formed inside the electronic device 101.

The audio signal output from the speaker 310 may have a resonance frequency based on a volume of the resonance space by resonating in the resonance space. For example, the speaker 310 may receive a signal including audio information from a processor (e.g., the processor 120 of FIG. 1) through at least one circuit. A diaphragm of the speaker 310 may be configured to output an audio signal by vibrating based on the received audio signal. The audio signal output from the speaker 310 may resonate in a resonance space. Since the audio signal resonates in the resonance space, a resonance frequency of the audio signal may be changed according to a volume of the resonance space.

The speaker 310 may provide a user with an audio signal based on the resonance frequency according to the volume of the resonance space. In order for the electronic device 101 to provide an audio signal having a designated resonance frequency, a volume of a resonance space corresponding to the resonance frequency may be required. Since an audio signal in a relatively low sound range has a lower frequency than a signal in a relatively high sound range, it may have a relatively long wavelength. For a quality of audio in the relatively low sound range having the relatively long wavelength, a resonance space of a certain volume or more may be required. For example, as the resonance space increases, the quality of the audio in the lower sound range may be improved.

According to an embodiment, the shield can 330 forming the resonance space may extend toward the electronic component 320 to expand the resonance space. According to an embodiment, the shield can 330 may partially enclose the speaker 310 and the electronic component 320 spaced apart from the speaker 310. The shield can 330 may expand the resonance space by enclosing not only the speaker 310 but also the electronic component 320 spaced apart from the speaker 310.

Referring to FIG. 4B, the shield can 330 may include a first portion 331 and a second portion 332. For example, the first portion 331 may be a portion of the shield can 330 including a region overlapping the speaker 310. For example, the first portion 331 may include a region overlapping the speaker 310 inserted into the first through-hole (e.g., the first through-hole 251 of FIG. 5). The region overlapping the speaker 310 may be referred to as a region of the shield can 330 overlapping the speaker 310 when the shield can 330 is viewed from above.

For example, the second portion 332 may extend from the first portion 331 toward the electronic component 320. For example, the second portion 332 may extend from the first portion 331 toward the electronic component 320 to partially enclose the electronic component 320 separated from the speaker 310. According to an embodiment, the second portion 332 may include a first opening 333 at least partially overlapping the electronic component 320. For example, the electronic component 320 may be exposed to the outside through the first opening 333.

According to an embodiment, as the shield can 330 is expanded through the second portion 332, the resonance space may be expanded. For example, in a case that the shield can 330 encloses only the speaker 310, an audio signal may resonate in a space (e.g., a first space S1 of FIG. 6A) between the shield can 330 and the speaker 310. As the shield can 330 according to an embodiment extends toward the electronic component 320, the resonance space may be expanded by a space formed by the second portion 332. For example, the shield can 330 may include a first space (e.g., the first space S1 of FIG. 6A) between the first portion 331 and the speaker 310 and a second space (e.g., a second space S2 of FIG. 6A) between the second portion 332 and a PCB (e.g., a PCB 250 of FIG. 6A). As the first space S1 is connected to the second space S2, the resonance space may be expanded.

According to an embodiment, the first portion 331 may include a step 334 to expand the resonance space. For example, the step 334 may protrude from at least a portion of a region overlapping the speaker 310. For example, at least a portion of the step 334 may be exposed to the outside in a state in which the second support member (e.g., the second support member 260 of FIG. 4C) is disposed. A structure of the step 334 will be described with reference to FIG. 6A.

According to an embodiment, a first sealing member 341 may seal a gap between a second support member (e.g., the second support member 260 of FIG. 4C) and the shield can 330. For example, the first sealing member 341 may surround at least a portion of a periphery of the first opening 333. The first sealing member 341 may be disposed between the second portion 332 and the second support member 260, thereby sealing the gap between the shield can 330 and the second support member 260. Through the first sealing member 341, the resonance space inside the shield can 330 may be isolated from an outer space of the shield can 330. As the resonance space is sealed by the first sealing member 341, it may reduce a quality deterioration of an audio signal.

Referring to FIG. 4C, the second support member 260 may cover a surface (e.g., the surface 243a of FIG. 4A) of a first support member (e.g., the first support member 243 of FIG. 4A). For example, the second support member 260 may be spaced apart from the surface 243a of the first support member 243. For example, the second support member 260 may be disposed under the first support member 243 (e.g., in a -z direction). For example, a PCB (e.g., the PCB 250 of FIG. 4A), a speaker (e.g., the speaker 310 of FIG. 4A), and the electronic component 320 may be positioned in a space between the first support member 243 and the second support member 260.

According to an embodiment, the second support member 260 may include a second opening 262 facing the first opening 333. For example, the second opening 262 may at least partially overlap the first opening 333. For example, the first opening 333 and the second opening 262 overlapping each other may be aligned with the electronic component 320. For example, the electronic component 320 may be exposed to the outside through the first opening 333 and the second opening 262. In an embodiment, the second support member 260 may include a second through-hole 261 for accommodating the step 334.

According to an embodiment, the electronic device 101 may include an opened structure for the electronic component 320 adjacent to the speaker 310. The opened structure may be referred to as a structure including an opening for passing through light emitted from the electronic component 320 or light transmitted to the electronic component 320.

For example, the electronic component 320 may include the flash 321. The flash 321 may include a light-emitting unit configured to emit light. Opened structures may be formed on a transmission path of the light such that the light emitted from the light-emitting unit may be transmitted to the outside of the electronic device 101. For example, the first opening 333 of the shield can 330, the second opening 262 of the second support member 260, and a third opening (e.g., a third opening 211a of FIG. 6A) of a second plate (e.g., a second plate 211 of FIG. 6A) may be formed for the path of the light. For example, the second opening 262 and/or the third opening 211a may be covered by a transparent member (e.g., a first window 351 and a second window 352 of FIG. 6A) including a substantially transparent material.

For example, the electronic component 320 may include a sensor. For example, the sensor may include at least one of an illuminance sensor, a heart rate measurement (HRM) sensor, or a flicker sensor, but is not limited thereto. The sensors may be configured to convert a change in physical environmental information into an electrical signal. The sensors may include opened structures for receiving a change in environmental information to be a target of detection. For example, the sensors may include a light receiving unit capable of receiving light from the outside of the electronic device 101. The opened structures may be provided on a transmission path of light such that the light may be transmitted from the outside of the electronic device 101 to the light receiving unit. For another example, the sensors may transmit and/or receive electromagnetic waves. On a transmission path of the electromagnetic waves, opened structures at least partially filled with dielectric may be provided. The above-described sensors are a merely exemplary description of sensors including opened structures, but are not limited thereto.

For example, the electronic component 320 may include a connector hole (e.g., the connector hole 322 of FIG. 9). The connector hole 322 may be coupled with a connecting member (e.g., a coaxial cable) for electrically connecting the PCB 250 to an external electronic device. The connector hole 322 may be opened such that the connecting member may be inserted.

For example, the electronic component 320 may include a camera (e.g., the camera 323 of FIG. 10). The camera 323 may include a lens capable of collecting light from a subject. Opened structures may be provided on a transmission path of light such that the light may be transmitted from the subject to the lens. In addition, the electronic component 320 may include various electronic components associated with the opened structure.

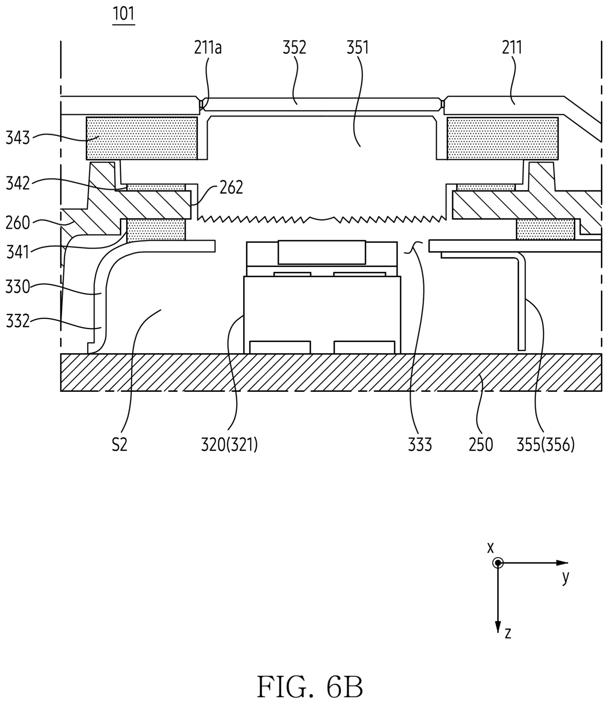

According to an embodiment, among the electronic components 320 adjacent to the speaker 310, those requiring an opened structure of the shield can 330 may be aligned with the first opening 333. In an embodiment, according to a type of the electronic component 320, the electronic component 320 may also be aligned with the first opening 333 and the second opening 262. According to an embodiment, in a case that the resonance space for the audio signal is not sealed, vibration due to the audio signal may leak to the outside of the resonance space. In a case that the vibration due to the audio signal leaks to the outside of the resonance space, the resonance of the audio signal may not be constant and a quality of the audio signal may be deteriorated. In a case that the shield can 330 is expanded in order to expand the resonance space, sealing of the resonance space may be required. The electronic device 101 according to an embodiment may include a first sealing member (e.g., the first sealing member 341 of FIG. 4B), a second sealing member (e.g., a second sealing member 342 of FIG. 6B), and/or a third sealing member (e.g., a third sealing member 343 of FIG. 6B) to seal the resonance space.

FIG. 5 is an exploded perspective view of an electronic device according to an embodiment.

Referring to FIG. 5, a first support member 243 and a second support member 260 may be spaced apart from each other. For example, a printed circuit board 250 and/or a speaker 310 may be disposed on a surface 243a of the first support member 243. The second support member 260 may be spaced apart from the surface 243a in a direction (e.g., a -z direction) in which the surface 243a faces. For example, the second support member 260 may be disposed under the first support member 243 (e.g., in the -z direction). In an embodiment, the PCB 250, the speaker 310, a shield can 330, and/or an electronic component 320 may be positioned between the first support member 243 and the second support member 260. The second support member 260 may be disposed under the shield can 330 (e.g., in the -z direction). A second plate (e.g., a second plate 211 of FIG. 6A) may be disposed under the second support member 260 (e.g., in the -z direction).

For example, the speaker 310 may be enclosed by an enclosure 360. The enclosure 360 may enclose the speaker 310 to protect the speaker 310. The enclosure 360 may include an open region 360a for an audio signal output from the speaker 310. For example, the open region 360a may expose a second surface 312 of the speaker 310. An audio signal emitted to the second surface 312 of the speaker 310 may be guided through the open region 360a. According to an embodiment, the speaker 310 may be inserted into a first through-hole 251 of the PCB 250 in a state of being enclosed by the enclosure 360. In an example, the enclosure 360 may be omitted.

According to an embodiment, the electronic component 320 may be disposed on a surface 250a of the PCB 250. For example, the electronic component 320 may be spaced apart from the speaker 310. For example, a region 250c in which the electronic component 320 is disposed on the surface 250a of the PCB 250 may be spaced apart from the first through-hole 251 in which the speaker 310 is positioned.

According to an embodiment, the shield can 330 may partially enclose the speaker 310 and the electronic component 320. For example, the shield can 330 may be disposed on the surface 250a of the PCB 250 to partially enclose the speaker 310 and the electronic component 320. For example, the speaker 310 and the electronic component 320 may be disposed above the shield can 330 (e.g., in a +z direction).

According to an embodiment, the electronic component 320 may be aligned with a first opening 333 of the shield can 330. According to a function of the electronic component 320, the electronic component 320 may be aligned with the first opening 333 of the shield can 330 and a second opening 262 of the second support member 260. According to an embodiment, the second support member 260 may include the second opening 262 facing the first opening 333. For example, in a case that the electronic component 320 includes an illuminance sensor, the illuminance sensor may be aligned with each of the first opening 333 and the second opening 262 to receive light from the outside of an electronic device 101. For example, when the second support member 260 is viewed in a direction (e.g., the +z direction) from the second support member 260 toward the first support member 243, the electronic component 320 may be visible through the first opening 333 and the second opening 262.

The electronic device 101 according to an embodiment may include a first window 351 covering the second opening 262. For example, the first window 351 may be configured to protect the electronic component 320 exposed through the second opening 262 and to pass through light associated with the electronic component 320. For example, a portion of the first window 351 may be inserted into the second opening 262. The first window 351 may include a substantially transparent or translucent material (e.g., glass) to pass through the light associated with the electronic component 320. For example, in a case that the electronic component 320 includes a flash 321, the flash 321 may be configured to emit light toward the first opening 333. The light emitted from the flash 321 may pass through the first opening 333, the first window 351, and the second opening 262 aligned with each other.

According to an embodiment, a first sealing member 341 may surround a periphery of the first opening 333. For example, the first sealing member 341 may be disposed between the shield can 330 and the second support member 260. The first sealing member 341 may isolate an inner space of the shield can 330 opened through the first opening 333 from an outer space of the shield can 330.

FIG. 6A is a cross-sectional view in which an electronic device according to an embodiment is cut along line A-A' of FIG. 4A. FIG. 6B is an enlarged view of a region B of FIG. 6A.

Referring to FIG. 6A, in an example, a printed circuit board 250 and a speaker 310 may be disposed on a surface 243a of a first support member 243. A display 201 may be disposed on another surface 243b, which is opposite to the surface 243a of the first support member 243, of the first support member 243. A second support member 260 may be spaced apart from the surface 243a downward (e.g., in a -z direction). A second plate 211 may be disposed under the second support member 260 (e.g., in the -z direction).

According to an embodiment, the speaker 310 may include a first surface 311 facing the first support member 243 and a second surface 312 opposite to the first surface 311. For example, the first support member 243 may be in contact with the first surface 311 and include a seating groove 243c for supporting the speaker 310. The speaker 310 may be inserted into a first through-hole 251 of the PCB 250 and disposed on the seating groove 243c. The second surface 312 may face the shield can 330.

According to an embodiment, the speaker 310 may be electrically connected to the PCB 250. For example, an electronic device 101 may include a connecting member (e.g., a flexible PCB) 254 for electrically connecting the speaker 310 and the PCB 250. An end of the connecting member 254 may be connected to the speaker 310, and another end of the connecting member may be connected to the PCB 250, but is not limited thereto. For example, the connecting member 254 may pass through the first through-hole 251.

According to an embodiment, the shield can 330 may partially enclose the speaker 310 through a first portion 331 including a region overlapping the speaker 310. For example, the first portion 331 may be a portion of the shield can 330 that at least partially encloses the speaker 310, by enclosing the first through-hole 251 into which the speaker 310 is inserted. A first space S1 between the first portion 331 and the speaker 310 may be a portion of a resonance space for an audio signal.

According to an embodiment, the shield can 330 may expand the resonance space through a second portion 332 extending from the first portion 331 toward an electronic component 320. For example, the second portion 332 may partially enclose the electronic component 320. For example, the second portion 332 may enclose a lateral side of the electronic component 320 by enclosing a region (e.g., the region 250c of FIG. 5) of the PCB 250 in which the electronic component 320 is disposed. A first opening 333 of the second portion 332 may be aligned with the electronic component 320. As a second space S2 between the second portion 332 and the electronic component 320 is connected to the first space S1, the resonance space for the audio signal may be expanded. An audio signal output from the speaker 310 may be transmitted to the outside of the electronic device 101 through a speaker hole (e.g., the speaker hole 207 of FIG. 2) connected to the outside of the electronic device 101. For example, the audio signal may pass through a duct connected to the speaker hole and be transmitted to a user through the speaker hole.

In a case that the shield can 330 partially encloses only the speaker 310, the shield can 330 may include only the first portion 331. The first portion 331 may form a resonance space for the audio signal output from the speaker 310 by covering the first through-hole 251 into which the speaker 310 is inserted. The resonance space may be referred to as the first space S1. According to an embodiment, as the shield can 330 additionally includes the second portion 332, the second space S2 may be formed. Since the first space S1 and the second space S2 are connected to each other, the resonance space may be expanded by a volume of the second space S2. Since the audio signal may resonate in the first space S1 and the second space S2 connected to each other, a quality of the audio signal may be improved. A volume of the first space S1 may be approximately 0.3 cc, and a volume of the second space S2 may be approximately 0.22 cc. As the first space S1 is connected to the second space S2, the resonance space may be expanded from approximately 0.3 cc to approximately 0.52 cc.

According to an embodiment, in order to expand the resonance space, the shield can 330 may enclose the electronic component 320 adjacent to the speaker 310. The electronic component 320 adjacent to the speaker 310 may be an electronic component that requires a structure (e.g., the first opening 333) opened to the shield can 330. In a case that the resonance space is not sealed by opened structures, a quality deterioration of the audio signal may be caused. The electronic device 101 according to an embodiment may include at least one sealing member (e.g., a first sealing member 341, a second sealing member 342, and/or a third sealing member 343) for a resonance space extended to a peripheral space of the electronic component 320. For example, the at least one sealing member may include rubber, silicon, and/or a sponge, but is not limited thereto.

Referring to FIG. 6B, the electronic device 101 according to an embodiment may include the first sealing member 341, the second sealing member 342, and/or the third sealing member 343. According to a type of the electronic component 320, the second sealing member 342 and/or the third sealing member 343 may be omitted.

According to an embodiment, the first sealing member 341 may seal the second space S2 opened by the first opening 333 by being disposed between the second portion 332 and the second support member 260. For example, when the second support member 260 is disposed under the shield can 330 (e.g., in the -z direction), a gap may be formed between the second portion 332 and the second support member 260. The first sealing member 341 may at least partially surround a periphery of the first opening 333 to seal the gap. The second support member 260 may be configured to press the first sealing member 341, by being disposed under the first sealing member 341. As the first sealing member 341 is pressed by the second support member 260, the first sealing member 341 may be compressed and firmly seal the gap.

According to an embodiment, the second support member 260 may include a second opening 262 facing the first opening 333. For example, the second opening 262 may be covered by a first window 351. For example, a portion of the first window 351 may be inserted into the second opening 262, and another portion of the first window 351 may be disposed on the second support member 260.

According to an embodiment, the second plate 211 may include a third opening 211a facing the second opening 262. For example, the third opening 211a may be aligned with the second opening 262 and the first opening 333. The electronic device 101 according to an embodiment may include a second window 352 covering the third opening 211a. The second window 352 may be aligned with the first window 351 inserted into the second opening 262.

For example, in a case that the electronic component 320 is implemented as a flash 321, the flash 321 may be configured to emit light toward the first opening 333. The light emitted from the flash 321 may be transmitted to the outside of the electronic device 101 by passing through the first opening 333, the second opening 262, and the third opening 211a. The first window 351 and the second window 352 disposed on a path of the light may include a substantially transparent or translucent material (e.g., glass) so as to pass through the light without reflecting it.

According to an embodiment, the second sealing member 342 may surround at least a portion of a periphery of the second opening 262. For example, the second sealing member 342 may be disposed under the second support member 260 (e.g., in the -z direction) to surround the periphery of the second opening 262. For example, the second sealing member 342 may be disposed between the second support member 260 and the other portion of the first window 351 inserted into the second opening 262. For example, a gap may be formed between the portion of the first window 351 and the second opening 262 and/or between the other portion of the first window 351 and the second support member 260. Since the second space S2 opened through the first opening 333 is connected to the second opening 262 through the first opening 333, the resonance space may not be sealed by the gap. The second sealing member 342 may seal the resonance space by sealing the gap between the second support member 260 and the first window 351. For example, when the first window 351 is inserted into the second opening 262, the first window 351 may press the second sealing member 342. As the second sealing member 342 is pressed by the first window 351, the second sealing member 342 may be compressed and firmly seal the gap.

According to an embodiment, the third sealing member 343 may surround at least a portion of a periphery of the third opening 211a. For example, the third sealing member 343 may be disposed above the second plate 211 (e.g., in a +z direction) to surround the periphery of the third opening 211a. For example, the third sealing member 343 may be disposed between the first window 351 and the second plate 211 and/or between the second support member 260 and the second plate 211. For example, a gap may be formed between the first window 351 and the second plate 211 and/or between the second plate 211 and the second support member 260. An inner space of the electronic device 101 may not be sealed by the gap. For example, by introducing moisture through the gap, a malfunction and/or a failure of the electronic device 101 may be caused. The third sealing member 343 may seal the inner space of the electronic device 101 by sealing the gap. For example, the second plate 211 may press the third sealing member 343. As the third sealing member 343 is pressed by the second plate 211, the third sealing member 343 may be compressed and firmly seal the gap.

According to an embodiment, in a case that the shield can 330 extends toward the electronic component 320 in order to expand the resonance space, the resonance space may be sealed by the first sealing member 341, the second sealing member 342, and/or the third sealing member 343. According to an embodiment, as a first space (e.g., the first space S1 of FIG. 6A) and the second space S2 connected to each other are sealed, it may reduce a quality deterioration of the audio signal.

Referring back to FIG. 6A, in an example, the first portion 331 may include a step 334 for expanding the first space S1 between the speaker 310 and the first portion 331. For example, the step 334 may protrude from at least a portion of a region overlapping the speaker 310 in a direction (e.g., the -z direction) in which the surface 243a of the first support member 243 faces. As the step 334 is formed, a portion of the shield can 330 including the step 334 may be farther from a surface 250a of the PCB 250 or the first support member 243 than a portion of the shield can 330 without the step 334. In an example, the second support member 260 may include a second through-hole 261 for accommodating the step 334. For example, the step 334 protruding downward may be at least partially accommodated in the second through-hole 261.

According to an embodiment, the first space S1 may be expanded by the step 334. Since the step 334 protrudes in a direction (e.g., the -z direction) away from the second surface 312, the volume of the first space S1 may be expanded. As the first space S1 is expanded by the step 334, the resonance space for the audio signal may be expanded, such that a quality of the audio signal may be improved.

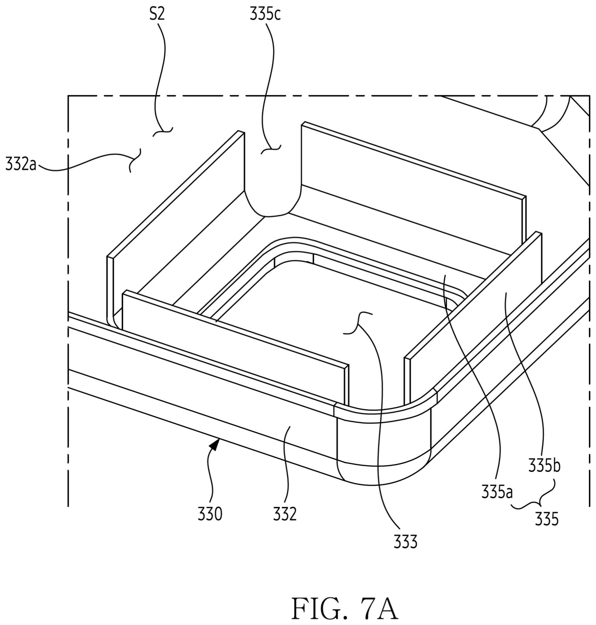

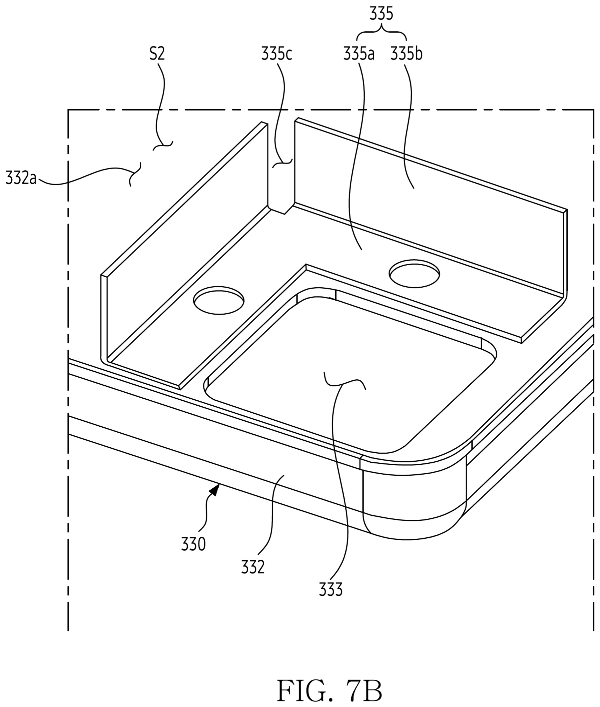

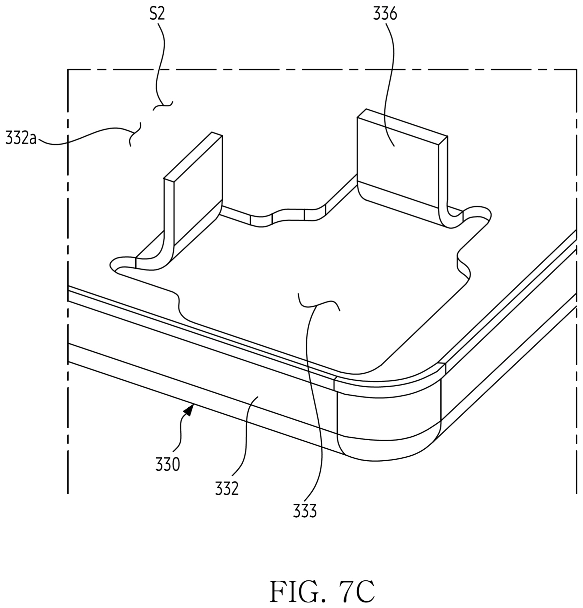

According to an embodiment, as the shield can 330 includes the second portion 332 extending toward the electronic component 320, a structure for supporting the second portion 332 may be included. The structure may be implemented through a separate structure (e.g., a support structure 335 of FIGS. 7A and 7B and/or a bridge 336 of FIG. 7C).

FIGS. 7A and 7B illustrate a support structure according to an embodiment. FIG. 7C illustrates a bridge of a shield can.

Referring to FIGS. 7A and 7B, a shield can 330 may include a support structure 335. The support structure 335 may be configured to reinforce rigidity of a second portion 332 by supporting the second portion 332.

According to an embodiment, the support structure 335 may include a flange 335a and/or a partition wall 335b. For example, the flange 335a may be coupled to a surface 332a facing a printed circuit board (e.g., the PCB 250 of FIG. 6A) of the second portion 332. For example, the flange 335a may have a width so as to be attached to the surface 332a of the second portion 332. For example, the flange 335a may surround at least a portion of a periphery of a first opening 333. As illustrated in FIG. 7A, the flange 335a may entirely surround the periphery of the first opening 333. As illustrated in FIG. 7B, the flange 335a may also surround a portion of the periphery of the first opening 333. For example, the partition wall 335b may be in contact with the PCB 250 by extending from a periphery of the flange 335a toward the PCB 250. The partition wall 335b may support the flange 335a. As the flange 335a is in contact with the second portion 332 and the partition wall 335b supports the flange 335a, the support structure 335 may support the second portion 332.

According to an embodiment, the partition wall 335b may include at least one groove 335c. For example, according to a form in which the flange 335a surrounds the periphery of the first opening 333, the flange 335a may include two or more peripheries. The number of partition walls 335b extending from the periphery of the flange 335a may correspond to the number of peripheries of the flange 335a. For example, in a case that a chamfer is formed at a corner of the flange 335a, the partition walls 335b extending from the peripheries of the flange 335a may include the at least one groove 335c. A plurality of partition walls 335b may be spaced apart from each other by the at least one groove 335c. According to an embodiment, a space covered by the support structure 335 may be connected to a second space S2 without being isolated from the second space S2 by the at least one groove 335c.

Referring to FIG. 7C, a structure for supporting the second portion 332 may be implemented by changing a shape of the shield can 330 instead of a separate structure. For example, the second portion 332 may include a bridge 336. The bridge 336 may be bent toward the PCB 250 from at least a portion of the periphery of the first opening 333. The bridge 336 may support the second portion 332 by contacting the PCB 250. For example, the bridge 336 may include a plurality of bridges. The plurality of bridges may be spaced apart from each other. According to an embodiment, the second portion 332 may be supported through a simple structure change of the shield can 330 without using a separate component.

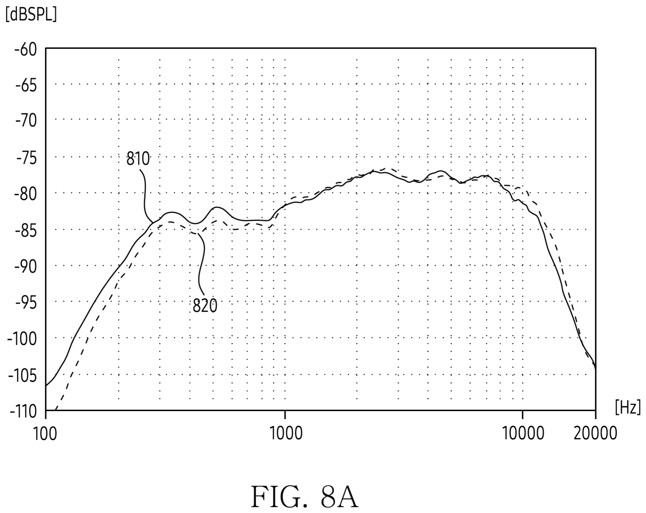

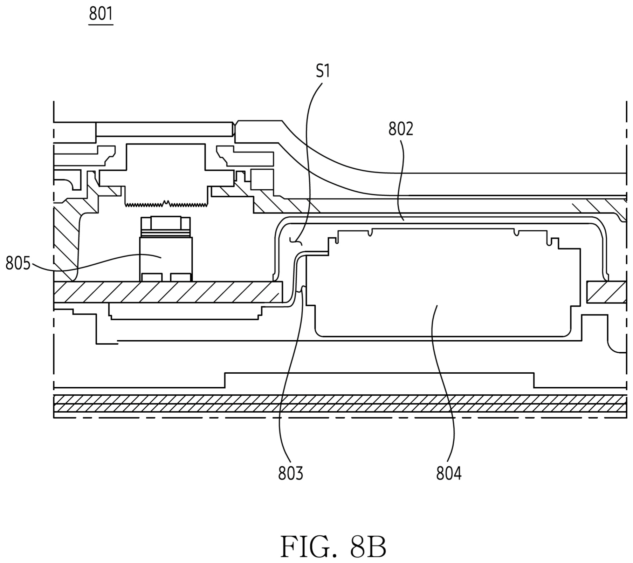

FIG. 8A is a graph indicating a change in an output sound pressure level of a speaker. FIG. 8B illustrates an example of an electronic device according to a comparative example.

A horizontal axis of a graph of FIG. 8A is a frequency (unit: Hz), and a vertical axis of the graph is an output sound pressure level (SPL, unit: dBSPL) of a speaker 310. A first graph 810 of FIG. 8A indicates an output sound pressure level of an audio signal provided from the electronic device (e.g., the electronic device 101 of FIG. 6A) in which a resonance space is expanded, according to an embodiment. The electronic device 101 according to an embodiment may provide a first space (e.g., the first space S1 of FIG. 6A) and a second space (e.g., the second space S2 of FIG. 6A) connected to each other as the resonance space. For example, in the electronic device 101 having a structure in which the first space S1 and the second space S2 are connected, the resonance space may be approximately 0.52 cc.

A second graph 820 indicates an output sound pressure level of an audio signal provided from an electronic device (e.g., an electronic device 801 of FIG. 8B) in which a resonance space is not expanded, according to a comparative example. The electronic device 801 according to the comparative example may provide only the first space S1 as the resonance space. In the electronic device 801 including only the first space S1, the resonance space may be approximately 0.3 cc.

Referring to FIG. 8B, a shield can 802 may cover a first through-hole 803. An electronic component 805 spaced apart from a speaker 804 may be disposed outside the shield can 802. The shield can 802 may form a resonance space through a space enclosing the speaker 804. For example, in the electronic device 801 according to the comparative example illustrated in FIG. 8B, the resonance space for the audio signal may be the first space S1. In the electronic device 801 according to the comparative example illustrated in FIG. 8B, a remaining structure and component other than a structure of the shield can 802 may be substantially the same as the electronic device 101 according to an embodiment illustrated in FIG. 6A.

Referring back to FIG. 8A, in a frequency range of approximately 100 Hz to approximately 500 Hz, the SPL of the first graph 810 may be higher than the SPL of the second graph 820. Comparing the first graph 810 and the second graph 820, in the frequency range of approximately 100 Hz to approximately 500 Hz, the SPL of the first graph 810 may be approximately 1.2 dbSPL higher on average than the SPL of the second graph 820. In a case that the first space (e.g., the first space S1 of FIG. 6A) and the second space (e.g., the second space S2 of FIG. 6A) are connected, since the resonance space for the audio signal output from the speaker (e.g., the speaker 310 of FIG. 6A) is expanded, the output sound pressure level may be high and a quality of the audio signal may be improved. For example, since the electronic device (e.g., the electronic device 101 of FIG. 6A) according to an embodiment may expand the resonance space by a volume of the second space S2 other than a case of providing only the first space S1 as the resonance space, such as the electronic device (e.g., the electronic device 801 of FIG. 8B) according to the comparative example, a quality of the audio signal may be improved.

Table 1 below indicates a result of testing timbres of the electronic device 101 according to an embodiment and the electronic device 801 according to the comparative example.

**[Table 1]**

| | Comparative example | Present example | Difference |
|---|---|---|---|
| Loudness (unit: phon) | 71.6 | 72.0 | 0.4 |
| Timbre (unit: phon) | 82.0 | 85.6 | 3.6 |

Referring to the Table 1, the audio signal output from the speaker 310 of the electronic device 101 according to an embodiment may have the loudness approximately 0.4 phon higher and the timbre approximately 3.6 phon higher than the audio signal output from the speaker 804 of the electronic device 801 according to the comparative example. In a case of the electronic device 101 according to an embodiment, an improved quality audio signal may be provided through an extended resonance space.

FIGS. 9 and 10 illustrate a portion of an electronic device according to an embodiment in which a second support member is omitted.

According to an embodiment, an electronic component 320 may include at least one of a flash 321, a sensor, a camera (e.g., a camera 323 of FIG. 10), or a connector hole (e.g., a connector hole 322 of FIG. 9).

Referring to FIG. 9, in an example, a shield can 330 may partially enclose the flash 321 and/or the connector hole 322. For example, the shield can 330 may include a first opening 333 facing the electronic component 320. For example, the first opening 333 may include an opening 337 facing the flash 321 and/or an opening 338 facing the connector hole 322.

For example, the connector hole 322 may be coupled with a connecting member (e.g., a coaxial cable) that may be electrically connected to a printed circuit board (e.g., the PCB 250 of FIG. 6A). In order for the connecting member to be coupled, the connector hole 322 may require structures (e.g., the first opening 333) opened to the shield can 330. Although not illustrated, an electronic device 101 according to an embodiment may include a sealing member for sealing the opened structures for the connector hole 322. Through the sealing member, an extended resonance space may be isolated from an outer space of the shield can 330.

According to an embodiment, the shield can 330 may enclose a partial region of the PCB 250 by extending toward the flash 321 and/or the connector hole 322. By an expanded volume of the shield can 330, a resonance space for an audio signal output from a speaker 310 may be expanded.

Referring to FIG. 10, a shield can 330 may partially enclose a flash 321 and/or a camera 323. For example, the camera 323 may include a rear camera exposed to a second plate 211. For example, a first opening 333 may include an opening 337 facing the flash 321 and/or an opening 339 facing the camera 323. According to an embodiment, the shield can 330 may enclose a partial region of a PCB (e.g., the PCB 250 of FIG. 6A) by extending toward the flash 321 and/or the camera 323. By an expanded volume of the shield can 330, a resonance space for an audio signal output from a speaker 310 may be expanded. As an example of an electronic component 320, the flash 321, a connector hole 322, and the camera 323 have been described, but are not limited thereto. The electronic component 320 may include various electronic components adjacent to the speaker 310. The shield can 330 may expand the resonance space by extending to the electronic component 320. A quality of the audio signal output from the speaker 310 may be improved by the expanded resonance space.

An electronic device (e.g., the electronic device 101 of FIG. 4A) according to an embodiment may include a first support member (e.g., the first support member 243 of FIG. 6A). The electronic device may include a second support member (e.g., the second support member 260 of FIG. 6A) spaced apart from the first support member. The electronic device may include a printed circuit board (PCB) (e.g., the PCB 250 of FIG. 6A) including a first through-hole (e.g., the first through-hole 251 of FIG. 6A), the PCB disposed on a surface (e.g., the surface 243a of FIG. 6A) of the first support member facing the second support member. The electronic device may include a speaker (e.g., the speaker 310 of FIG. 6A), inserted into the first through-hole, disposed on the surface of the first support member. The electronic device may include an electronic component (e.g., the electronic component 320 of FIG. 6A), disposed on a surface (e.g., the surface 250a of FIG. 6A) of the PCB facing the second support member, spaced apart from the speaker. The electronic device may include a shield can (e.g., the shield can 330 of FIG. 6A), disposed on the surface of the PCB, at least partially enclosing the speaker and the electronic component. The shield can may include a first portion (e.g., the first portion 331 of FIG. 6A) and a second portion (e.g., the second portion 332 of FIG. 6A). The first portion may include a region overlapping the speaker when the shield can is viewed from above. The first portion may partially enclose the speaker. The second portion may partially enclose the electronic component by extending from the first portion toward the electronic component. The second portion may include a first opening (e.g., the first opening 333 of FIG. 6A) facing the electronic component. The electronic device may include a first sealing member (e.g., the first sealing member 341 of FIG. 4B), surrounding a periphery of the first opening, disposed between the second portion and the second support member. A first space (e.g., the first space S1 of FIG. 6A) between the first portion and the speaker may be connected to a second space (e.g., the second space S2 of FIG. 6A) between the second portion and the PCB, to provide a resonance space for an audio signal output from the speaker. According to an embodiment of the present disclosure, the electronic device may have a structure capable of providing a relatively large resonance space by expanding the resonance space formed through the shield can. For example, the shield can may expand the resonance space by a volume of the second space by further including the second portion extending toward the electronic component. Since the electronic component may have a structure including an opening, the electronic device may include the first sealing member for sealing the resonance space. The first sealing member may seal the resonance space. Since the audio signal may resonate in the first space and the second space connected to each other, a quality of the audio signal may be improved.

According to an embodiment, the first portion may include a step (e.g., the step 334 of FIG. 6A). The step may protrude from at least a portion of the region overlapping the first through-hole in a direction in which the surface of the first support member faces. According to an embodiment of the present disclosure, the first space may be expanded by the step. As the first space is expanded by the step, the resonance space for the audio signal may be expanded, such that the quality of the audio signal may be improved.

According to an embodiment, the second support member may include a second through-hole (e.g., the second through-hole 261 of FIG. 6A) in which the step is accommodated. According to an embodiment of the present disclosure, the second support member may include the second through-hole for accommodating the step. The step may be at least partially accommodated in the second through-hole.

According to an embodiment, the shield can may include a support structure (e.g., the support structure 335 of FIG. 7A). The support structure may include a flange (e.g., the flange 335a of FIG. 7A) and a partition wall (e.g., the partition wall 335b of FIG. 7A). The flange may be coupled to a surface of the second portion facing the PCB. The flange may surround at least a portion of the periphery of the first opening. The partition wall may be in contact with the PCB by extending from the flange toward the PCB. According to an embodiment of the present disclosure, the support structure may support the second portion. The second portion for expanding the resonance space may have rigidity by being supported by the support structure.

According to an embodiment, the partition wall may include at least one groove (e.g., the at least one groove 335c of FIG. 7A). According to an embodiment of the present disclosure, the at least one groove may connect the first space and the second space by opening a space surrounded by the support structure. In a case that the at least one groove is not formed, the space surrounded by the support structure may be isolated from a remaining space of the second space, such that a volume of the second space may be reduced. According to an embodiment, the space covered by the support structure may be connected to another space of the second space without being isolated from another space of the second space, by the at least one groove.

According to an embodiment, the second portion may include a bridge (e.g., the bridge 336 of FIG. 7C). The bridge may be in contact with the PCB by being bent from at least a portion of the periphery of the first opening toward the PCB. According to an embodiment of the present disclosure, the second portion may be supported by the bridge.

According to an embodiment, the speaker may include a first surface (e.g., the first surface 311 of FIG. 6A) in contact with the first support member, and a second surface (e.g., the second surface 312 of FIG. 6A) opposite to the first surface. The first space may include a space between the second surface and the shield can. According to an embodiment of the present disclosure, the shield can may form a back volume chamber of the speaker. For example, the shield can may cover the second surface, which is a rear surface of the speaker.

According to an embodiment, the first support member may include a seating groove (e.g., the seating groove 243c of FIG. 6A). The seating groove may be in contact with the first surface and support the speaker. According to an embodiment of the present disclosure, the speaker may be stably disposed in a designated position by being disposed in the seating groove.

According to an embodiment, the first support member may include another surface (e.g., the other surface 243b of FIG. 6A) opposite to the surface of the first support member. The second support member may be spaced apart from the surface of the first support member in a direction in which the surface of the first support member faces. According to an embodiment of the present disclosure, the first support member and the second support member may be spaced apart from each other. The PCB, the speaker, and the electronic component may be mounted in the space between the first support member and the second support member.

The electronic device according to an embodiment may further include a display (e.g., the display 201 of FIG. 6A) disposed on the other surface of the first support member. According to an embodiment of the present disclosure, the first support member may support the display. The second surface of the speaker may be referred to as a front surface facing the display, and the first surface of the speaker may be referred to as a rear surface facing a direction opposite to a direction facing the display. The first space and the second space may be referred to as a back volume chamber covering the rear surface of the speaker.

According to an embodiment, the electronic component may include at least one of a flash (e.g., the flash 321 of FIG. 6A), a sensor, or a camera (e.g., the camera 323 of FIG. 10). According to an embodiment of the present disclosure, the electronic component may be disposed in an extended portion of the shield can. The electronic component may include at least one of the flash, the sensor, or the camera. Since the electronic component may be adjacent to the speaker, the shield can may extend toward the electronic component.

According to an embodiment, the electronic component may include a flash configured to emit light toward the first opening. The second support member may include a second opening (e.g., the second opening 262 of FIG. 6A) facing the first opening. The electronic device may further include a cover plate (e.g., the second plate 211 of FIG. 6A). The cover plate may include a third opening (e.g., the third opening 211a of FIG. 6A) facing the second opening. The cover plate may be disposed on the second support member. According to an embodiment of the present disclosure, in a case that the electronic component is implemented as the flash, an opening for light emitted from the flash may be required. For a transmission path of the light, the first opening, the second opening, and the third opening may be formed. The first opening, the second opening, and the third opening may be aligned with each other such that the light emitted from the flash may be transmitted to the outside of the electronic device.

The electronic device according to an embodiment may further include a first window (e.g., the first window 351 of FIG. 6A) covering the second opening, and a second window (e.g., the second window 352 of FIG. 6A) covering the third opening. According to an embodiment of the present disclosure, in a case that the second opening and the third opening aligned with the flash are opened, foreign substances may be introduced into the electronic device. Each of the second opening and the third opening may be shielded by being covered by the first window and the second window. The first window and the second window may include a substantially transparent or translucent material (e.g., glass) for light associated with the electronic component.

The electronic device according to an embodiment may further include a second sealing member (e.g., the second sealing member 342 of FIG. 6A). The second sealing member may surround at least a portion of a periphery of the second opening. The second sealing member may be disposed between the second support member and the first window. According to an embodiment of the present disclosure, the second sealing member may seal the resonance space by sealing a gap between the second support member and the first window.

The electronic device according to an embodiment may further include a third sealing member (e.g., the third sealing member 343 of FIG. 6A). The third sealing member may surround at least a portion of a periphery of the third opening. The third sealing member may be disposed between the cover plate and the second window. According to an embodiment of the present disclosure, the third sealing member may seal the resonance space by sealing a gap between the first window and the second plate and/or between the second support member and the second plate. Even though the shield can extends toward the electronic component in order to expand the resonance space, deterioration of a quality of the audio signal may be reduced as the extended second space is sealed.

An electronic device according to an embodiment may include a first support member, a second support member, a printed circuit board (PCB), a speaker, a camera, a flash, a shield can, and a first sealing member. The second support member may be spaced apart from the first support member. The PCB may include a first through-hole. The PCB may be disposed on a surface of the first support member facing the second support member. The speaker may be inserted into the first through-hole and disposed on the surface of the first support member. The camera may be disposed on the surface of the first support member. The camera may be spaced apart from the speaker. The flash may be disposed on the PCB. The flash may be positioned between the speaker and the camera. The flash may be configured to emit light toward the first opening. The shield can may be disposed on the surface of the PCB. The shield can may at least partially cover the speaker and the flash. The shield can may include a first portion and a second portion. The first portion may include a region overlapping the speaker when the shield can is viewed from above. The first portion may at least partially cover the speaker. The second portion may include the first opening facing the electronic component. The first sealing member may surround a periphery of the first opening. The first sealing member may be disposed between the second portion and the second support member. A first space between the first portion and the speaker may be connected to a second space between the second portion and the PCB, to provide a resonance space for an audio signal output from the speaker.

According to an embodiment, the second support member may include a second opening facing the first opening. The electronic device may further include a cover plate, a first window, and a second window. The cover plate may include a third opening facing the second opening. The cover plate may be disposed on the second support member. The first window may cover the second opening. The second window may cover the third opening.

The electronic device according to an embodiment may further include a second sealing member. The second sealing member may surround at least a portion of a periphery of the second opening. The second sealing member may be disposed between the second support member and the first window.

The electronic device according to an embodiment may further include a third sealing member. The third sealing member may surround at least a portion of a periphery of the third opening. The third sealing member may be disposed between the cover plate and the second window.

According to an embodiment, the first portion may include a step. The step may protrude from at least a portion of the region overlapping the first through-hole in a direction in which the surface of the first support member faces.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first support member;
a second support member spaced apart from the first support member;
a printed circuit board (PCB), including a first through-hole, disposed on a surface of the first support member facing the second support member;
a speaker, inserted into the first through-hole, disposed on the surface of the first support member;
an electronic component, disposed on a surface of the PCB facing the second support member, spaced apart from the speaker;
a shield can, disposed on the surface of the PCB, at least partially enclosing the speaker and the electronic component, the shield can including:
a first portion, including a region overlapping the speaker when the shield can is viewed from above, at least partially enclosing the speaker, and
a second portion, partially enclosing the electronic component by extending from the first portion toward the electronic component, including a first opening facing the electronic component; and
a first sealing member, surrounding a periphery of the first opening, disposed between the second portion and the second support member,
wherein a first space between the first portion and the speaker is connected to a second space between the second portion and the PCB, for a resonance space for an audio signal output from the speaker.

2. The electronic device of claim 1, wherein the first portion includes a step protruding from at least a portion of the region overlapping the first through-hole, in a direction in which the surface of the first support member faces.

3. The electronic device of claim 2, wherein the second support member includes a second through-hole in which the step is accommodated.

4. The electronic device of any one of claims 1 to 3, wherein the shield can includes:
a flange, coupled to a surface of the second portion facing the PCB, surrounding at least a portion of the periphery of the first opening, and
a support structure including a partition wall in contact with the PCB by extending from the flange toward the PCB.

5. The electronic device of claim 4, wherein the partition wall includes at least one groove.

6. The electronic device of any one of claims 1 to 5, wherein the second portion includes a bridge in contact with the PCB by being bent from at least a portion of the periphery of the first opening toward the PCB.

7. The electronic device of any one of claims 1 to 6, wherein the speaker includes:
a first surface in contact with the first support member, and
a second surface opposite to the first surface,
wherein the first space includes a space between the second surface and the shield can.

8. The electronic device of claim 7, wherein the first support member includes a seating groove, in contact with the first surface, for supporting the speaker.

9. The electronic device of any one of claims 1 to 8,
wherein the first support member includes another surface opposite to the surface of the first support member, and
wherein the second support member is spaced apart from the surface of the first support member in a direction in which the surface of the first support member faces.

10. The electronic device of claim 9, further comprising a display disposed on the other surface of the first support member.

11. The electronic device of any one of claims 1 to 10, wherein the electronic component comprises at least one of a flash, a sensor, a camera, or a connector hole.

12. The electronic device of any one of claims 1 to 11,
wherein the electronic component comprises a flash configured to emit light toward the first opening,
wherein the second support member includes a second opening facing the first opening, and
wherein the electronic device further comprises a cover plate disposed on the second support member and including a third opening facing the second opening.

13. The electronic device of claim 12, further comprising:
a first window covering the second opening; and
a second window covering the third opening.

14. The electronic device of claim 13, further comprising a second sealing member, surrounding at least a portion of a periphery of the second opening, disposed between the second support member and the first window.

15. The electronic device of claim 13 or claim 14, further comprising a third sealing member, surrounding at least a portion of a periphery of the third opening, disposed between the cover plate and the second window.
